# EUROPEAN PATENT APPLICATION

(11) **EP 4 718 148 A1**
(43) Date of publication of application: **01.04.2026**
(21) Application number: 24218684.9
(22) Date of filing: 10.12.2024
(51) Int. Cl.: G02C 7/04, G02C 11/00

(54) **SMART CONTACT LENS AND EMBEDDED MODULE THEREOF**

(30) Priority: 30.09.2024 TW 113137232
(71) Applicant: Azurewave Technologies, Inc., 231 New Taipei City (TW)
(72) Inventor: YEH, Tung-Lin, New Taipei City (TW); LIAO, Yu-Hsuan, New Taipei City (TW); CHIEN, Huang-Chan, New Taipei City (TW)
(74) Representative: Viering, Jentschura & Partner mbB Patent- und Rechtsanwälte

(57) **Abstract**

A smart contact lens (100) and an embedded module (2) thereof are provided. The embedded module (2) includes an annular carrier (21), an electronic chip (22), a plurality of metal circuits (23) formed on the annular carrier (21), and an encapsulant (24). The annular carrier (21) has a C-shaped segment (211), two buffering segments (212) respectively connected to two ends of the C-shaped segment (211), and a chip-bonding segment (213) connected in-between the two buffering segments (212). The C-shaped segment (211) and each of the two buffering segments (212) are provided with one stress blocking slot (211a) therebetween recessed in an outer edge (21a) of the annular carrier (21). The electronic chip (22) is mounted on the chip-bonding segment (213) and is embedded in the encapsulant (24). In a transverse cross-section of the embedded module (2), the chip-bonding segment (213) is straight-shaped, each of the two buffering segments (212) is arced and has a first radius (R1), and the C-shaped segment (211) is arced and has a second radius (R2) being greater than the first radius (R1).

## Description

### FIELD OF THE INVENTION

The present invention relates to a contact lens, and more particularly to a smart contact lens and an embedded module thereof.

### BACKGROUND OF THE INVENTION

A conventional smart contact lens is still in an early stage of development and has not yet been popularized. Therefore, research and development of the conventional smart contact lens currently focus on how to expand or increase its functions, whereas many technical details in the production and manufacturing of the conventional smart contact lens (e.g., dissipation of stress) have not been given much attention.

### SUMMARY OF THE INVENTION

In response to the above-referenced technical inadequacies, the present invention provides a smart contact lens and an embedded module thereof for effectively improving on the issues associated with conventional smart contact lenses.

In order to solve the above-mentioned problems, one of the technical aspects adopted by the present invention is to provide a smart contact lens, which includes a lens body and an embedded module. The lens body includes an optical portion and an annular wearing portion that surrounds the optical portion. The lens body defines a central axis that penetrates through a center of the optical portion. The embedded module is encapsulated in the annular wearing portion and includes an annular carrier, an electronic chip, a plurality of metal circuits, and an encapsulant. An outer contour of the annular carrier has a truncated cone shape, and the annular carrier has a C-shaped segment, two buffering segments respectively connected to two ends of the C-shaped segment, and a chip-bonding segment that is connected in-between the two buffering segments. An outer edge of the annular carrier has two stress blocking slots, and the C-shaped segment and each of the two buffering segments are provided with one of the two stress blocking slots therebetween. The electronic chip is mounted on the chip-bonding segment. The metal circuits are formed on the annular carrier. At least one of the metal circuits is electrically coupled to the electronic chip through the annular carrier. The encapsulant is formed on the chip-bonding segment, and the electronic chip is embedded in the encapsulant. In a transverse cross-section of the smart contact lens perpendicular to the central axis and passing through the electronic chip, the chip-bonding segment is straight-shaped, each of the two buffering segments is arced and has a first radius, a center of a circle that is not located at the central axis, and a buffering angle being within a range from 20 degrees to 45 degrees relative to the central axis, and the C-shaped segment is arced and has a second radius that is greater than the first radius.

In order to solve the above-mentioned problems, another one of the technical aspects adopted by the present invention is to provide an embedded module of a smart contact lens, which includes an annular carrier, an electronic chip, a plurality of metal circuits, and an encapsulant. The annular carrier defines a central axis, and an outer contour of the annular carrier has a truncated cone shape. The annular carrier has a C-shaped segment, two buffering segments respectively connected to two ends of the C-shaped segment, and a chip-bonding segment that is connected in-between the two buffering segments. An outer edge of the annular carrier has two stress blocking slots, and the C-shaped segment and each of the two buffering segments are provided with one of the two stress blocking slots therebetween. The electronic chip is mounted on the chip-bonding segment. The metal circuits are formed on the annular carrier, and at least one of the metal circuits is electrically coupled to the electronic chip through the annular carrier. The encapsulant is formed on the chip-bonding segment, and the electronic chip is embedded in the encapsulant. In a transverse cross-section of the embedded module perpendicular to the central axis and passing through the electronic chip, the chip-bonding segment is straight-shaped, each of the two buffering segments is arced and has a first radius, a center of a circle that is not located at the central axis, and a buffering angle being within a range from 20 degrees to 45 degrees relative to the central axis, and the C-shaped segment is arced and has a second radius that is greater than the first radius.

Therefore, the smart contact lens or the embedded module thereof in the present invention is provided with a structural cooperation between the annular carrier and other components, so that stress concentration of the chip-bonding segment generated from the electronic chip and the encapsulant can be gradually dispersed by the two buffering segments and then be released by the two stress blocking slots, thereby preventing a region having the metal circuits (e.g., the C-shaped segment) from being affected due to the stress concentration and effectively increasing production yield and operational efficiency of the smart contact lens.

These and other aspects of the present invention will become apparent from the following description of the embodiment taken in conjunction with the following drawings and their captions, although variations and modifications therein may be affected without departing from the scope of the novel concepts of the invention.

### BRIEF DESCRIPTION OF THE DRAWINGS

The described embodiments may be better understood by reference to the following description and the accompanying drawings, in which:
FIG. 1 is a schematic perspective view of a smart contact lens according to one embodiment of the present invention;
FIG. 2 is a schematic top view showing an embedded module of the smart contact lens of FIG. 1;
FIG. 3 is a schematic cross-sectional view of FIG. 2 that is arranged on a plane perpendicular to a central axis of the smart contact lens;
FIG. 4 is a schematic cross-sectional view taken along line IV-IV of FIG. 1;
FIG. 5 is a schematic perspective view of the smart contact lens in another configuration according to the present invention;
FIG. 6 is a schematic top view showing the embedded module of the smart contact lens of FIG. 5;
FIG. 7 is a schematic cross-sectional view of FIG. 6 that is arranged on a plane perpendicular to the central axis of the smart contact lens;
FIG. 8 is a schematic perspective view of the smart contact lens in yet another configuration according to the present invention;
FIG. 9 is a schematic top view showing the embedded module of the smart contact lens of FIG. 8; and
FIG. 10 is a schematic cross-sectional view of FIG. 9 that is arranged on a plane perpendicular to the central axis of the smart contact lens.

### DETAILED DESCRIPTION OF THE EXEMPLARY EMBODIMENTS

The present invention is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a," "an" and "the" includes plural reference, and the meaning of "in" includes "in" and "on." Titles or subtitles can be used herein for the convenience of a reader, which shall have no influence on the scope of the present invention.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present invention or of any exemplified term. Likewise, the present invention is not limited to various embodiments given herein. Numbering terms such as "first," "second" or "third" can be used to describe various components, signals or the like, which are for distinguishing one component/signal from another one only, and are not intended to, nor should be construed to impose any substantive limitations on the components, signals or the like.

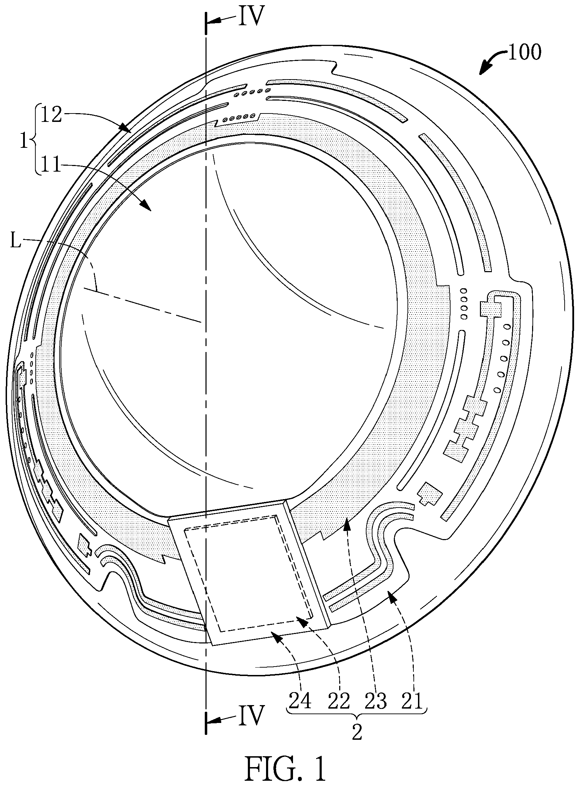

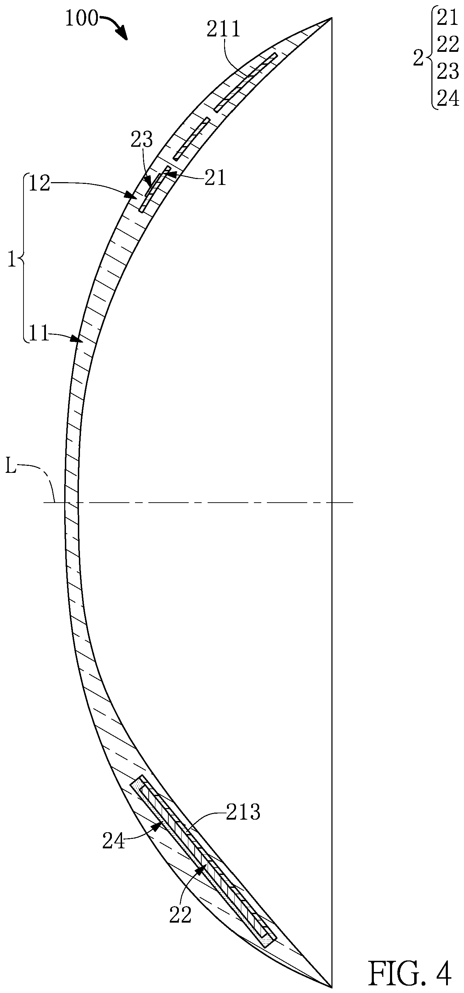

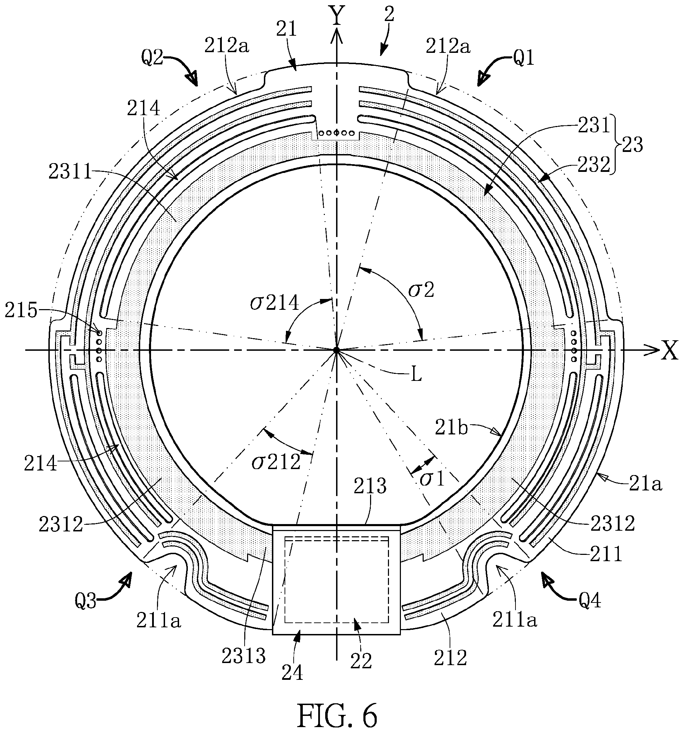

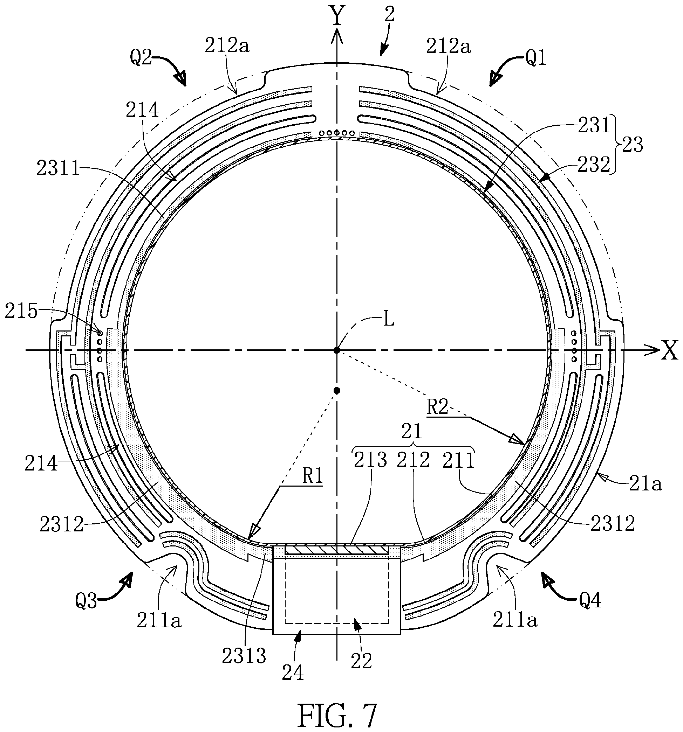

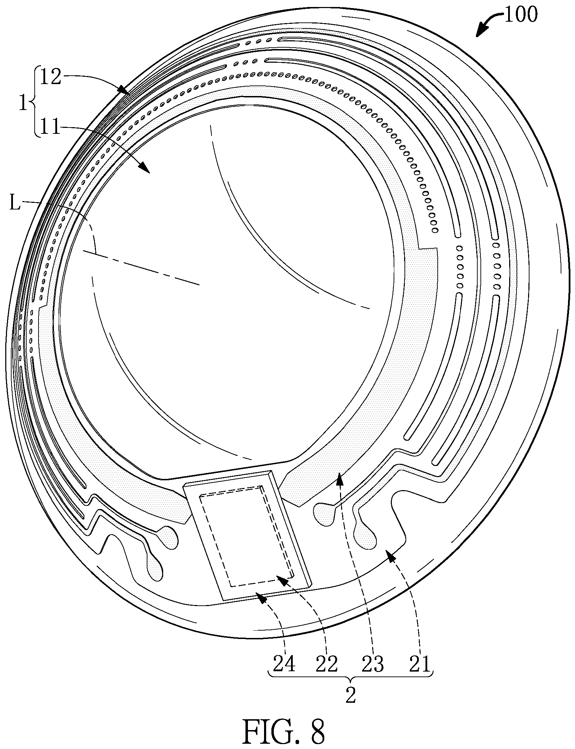

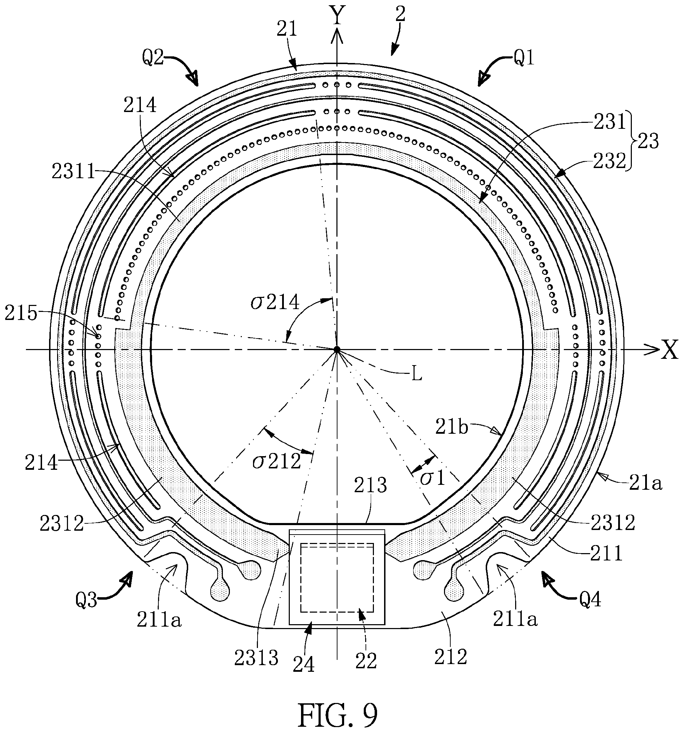

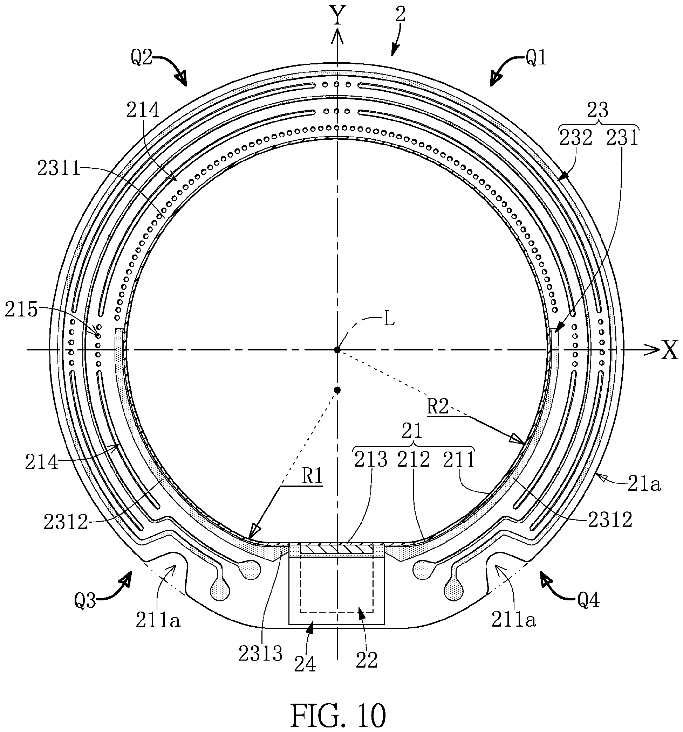

Referring to FIG. 1 to FIG. 10, one embodiment of the present invention is provided. As shown in FIG. 1 to FIG. 4, the present embodiment provides a smart contact lens 100 that can be worn on a user's eye or that can be embedded in the user's eye (not shown in the drawings) according to design requirements, but the present invention is not limited thereto.

Moreover, the smart contact lens 100 in the present embodiment can have a correction function for refractive error that can be hyperopia, myopia, astigmatism, presbyopia, or astigmatism-presbyopia; or, the smart contact lens 100 can be a makeup lens provided without the correction function for the refractive error.

The smart contact lens 100 in the present embodiment includes a lens body 1 and an embedded module 2 that is encapsulated (or embedded) in the lens body 1. In other words, the embedded module 2 is gaplessly connected to the lens body 1 and is not exposed from the lens body 1, and any holes formed in the embedded module 2 are fully filled with the lens body 1.

The lens body 1 in the present embodiment is formed by solidifying hydrogel or silicone hydrogel, and the hydrogel can be p-HEMA, but the present invention is not limited thereto. The lens body 1 includes an optical portion 11 and an annular wearing portion 12 that surrounds the optical portion 11. The optical portion 11 can be provided with or without the correction function for the refractive error according to design requirements.

Moreover, the lens body 1 defines a central axis L that penetrates through a center of the optical portion 11. In other words, the center of the optical portion 11 and a center of the annular wearing portion 12 are located at the central axis L. The annular wearing portion 12 is integrally connected to an outer edge of the optical portion 11 and has a substantially circular ring-shape, and the embedded module 2 is embedded in the annular wearing portion 12. In addition, a producing method for embedding the embedded module 2 in the annular wearing portion 12 (or a manufacturing method of the smart contact lens 100) can be adjusted or changed according to design requirements, but the present invention is not limited thereto.

It should be noted that the embedded module 2 of the smart contact lens 100 in the present embodiment is described in cooperation with the lens body 1, but the present invention is not limited thereto. For example, in other embodiments of the present invention, the embedded module 2 can be independently used (e.g., sold) or can be used in cooperation with other components.

In the present embodiment, the embedded module 2 includes an annular carrier 21, an electronic chip 22 mounted on the annular carrier 21, a plurality of metal circuits 23 formed on the annular carrier 21, and an encapsulant 24 that encapsulates the electronic chip 22. The annular carrier 21 in the present embodiment is a flexible printed circuit board (FPCB) and has a thickness within a range from 10 µm to 50 µm, and polymer materials of the annular carrier 21 can include polyimide (PI) or liquid-crystal polymer (LCP), but the present invention is not limited thereto.

Specifically, an outer contour of the annular carrier 21 has a truncated cone shape, and the annular carrier 21 has a C-shaped segment 211, two buffering segments 212 respectively connected to two ends of the C-shaped segment 211, and a chip-bonding segment 213 that is connected in-between the two buffering segments 212. Moreover, the electronic chip 22 is mounted on the chip-bonding segment 213, the encapsulant 24 is formed on the chip-bonding segment 213, and the electronic chip 22 is embedded in the encapsulant 24. The metal circuits 23 are formed on the annular carrier 21, and at least one of the metal circuits 23 is electrically coupled to the electronic chip 22 through the annular carrier 21.

It should be noted that since the electronic chip 22 cannot be deformed, the encapsulant 24 is configured to enable the electronic chip 22 to maintain its original shape or structure, but the annular carrier 21 would have a stress concentration issue that affects an operation performance of the embedded module 2. Accordingly, the annular carrier 21 can be provided with at least part of the following features for improving the stress concentration issue of the annular carrier 21.

In the present embodiment, an outer edge 21a of the annular carrier 21 has two stress blocking slots 211a, and the C-shaped segment 211 and each of the two buffering segments 212 are provided with one of the two stress blocking slots 211a therebetween. In other words, the chip-bonding region 213 and the two buffering segments 212 are substantially arranged between the two stress blocking slots 211a. In addition, each of the two stress blocking slots 211a can be defined as a part of a corresponding one of the two buffering segments 212. Moreover, the two stress blocking slots 211a in the present embodiment are of the same structure, and the two stress blocking slots 211a are spaced apart from the chip-bonding segment 213 by a same distance, but the present invention is not limited thereto.

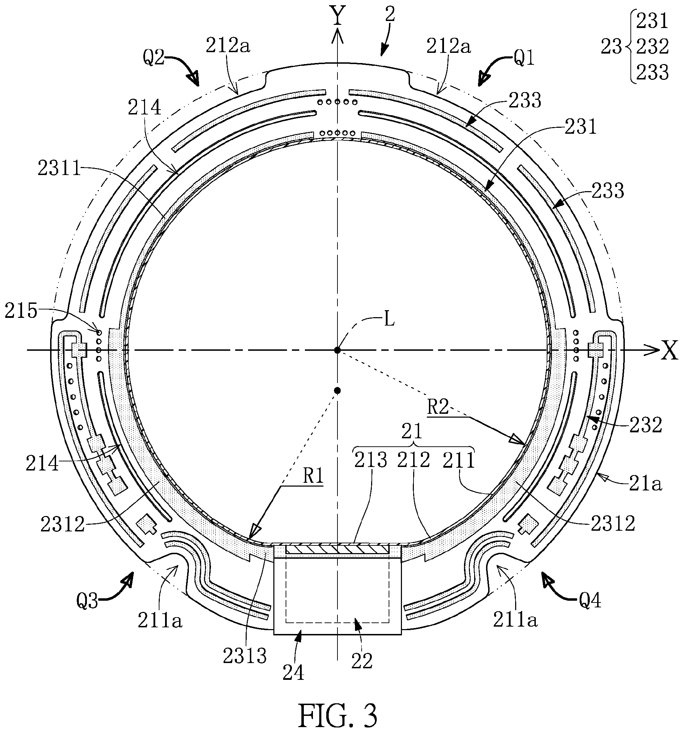

Specifically, as shown in FIG. 3, in a transverse cross-section of the smart contact lens 100 perpendicular to the central axis L and passing through the electronic chip 22, the chip-bonding segment 212 is straight-shaped, each of the two buffering segments 212 is arced and has a first radius R1, a center of a circle that is not located at the central axis L, and a buffering angle σ212 being within a range from 20 degrees to 45 degrees relative to the central axis L, and the C-shaped segment 211 is arced and has a second radius R2 that is greater than the first radius R1.

Accordingly, the smart contact lens 100 in the present embodiment is provided with a structural cooperation between the annular carrier 21 and other components, so that the stress concentration of the chip-bonding segment 213 generated from the electronic chip 22 and the encapsulant 24 can be gradually dispersed by the two buffering segments 212 and then be released by the two stress blocking slots 211a, thereby preventing a region having the metal circuits 23 (e.g., the C-shaped segment 211) from being affected due to the stress concentration. Moreover, the two buffering segments 212 are arranged at two opposite sides of the chip-bonding segment 213 by being formed with specific angles (e.g., the buffering angle σ212), thereby stably releasing the stress concentration of the chip-bonding segment 213.

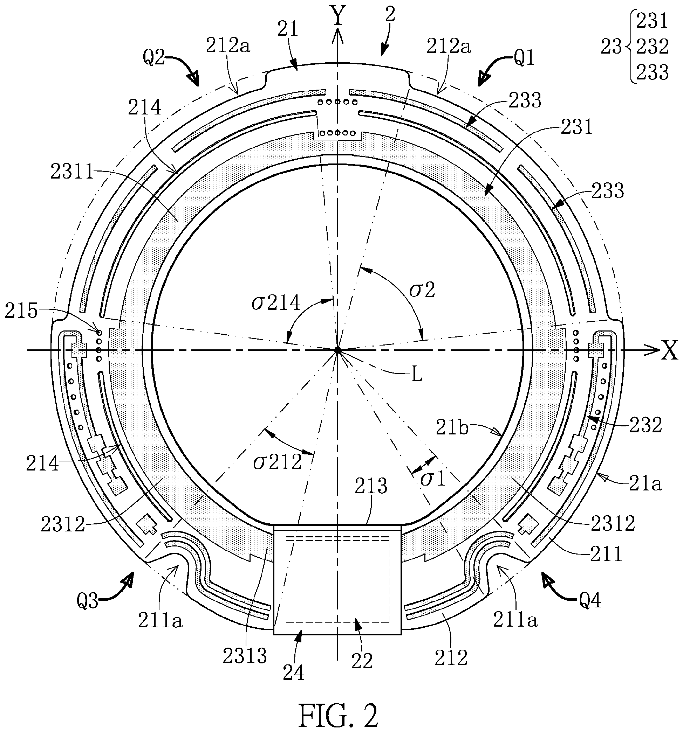

In other words, as shown in FIG. 2, in a top view of the smart contact lens 100 along the central axis L, the smart contact lens 100 defines a longitudinal axis Y passing through the central axis L and the electronic chip 22 and a transverse axis X that is perpendicular to the longitudinal axis Y and that passes through the central axis L, such that the top view is divided into a first quadrant Q1, a second quadrant Q2, a third quadrant Q3, and a fourth quadrant Q4 through the longitudinal axis Y and the transverse axis X, and the two stress blocking slots 211a are respectively located in the third quadrant Q3 and the fourth quadrant Q4.

Moreover, the outer edge 21a of the annular carrier 21 has two stress adjustment slots 212a arranged on the C-shaped segment 211, and inner walls of the two stress adjustment slots 212a can be configured to be stress releasing paths for effectively adjusting the stress concentration that is generated by deforming the annular carrier 21 to have the truncated cone shape and/or for further releasing the stress concentration that is generated by forming the metal circuits 23 on the C-shaped segment 211.

In the top view, the two stress adjustment slots 212a are respectively located in the first quadrant Q1 and the second quadrant Q2, each of the two stress blocking slots 211a has a first angle σ1 relative to the central axis L, and each of the two stress adjustment slots 212a has a second angle σ2 relative to the central axis L. The first angle σ1 is less than the buffering angle σ212 and is within a range from 10 degrees to 30 degrees, and the second angle σ2 is within a range from 10 degrees to 80 degrees, but the present invention is not limited thereto.

The above description describes the stress releasing design formed on the outer edge 21a of the annular carrier 21, and the following description describes other stress releasing designs of the annular carrier 21. The annular carrier 21 (e.g., the C-shaped segment 211) has a plurality of arc holes 214 and a plurality of circular holes 215. The arc holes 214 and the circular holes 215 penetrate through the annular carrier 21 and are arranged between any two of the metal circuits 23 adjacent to each other, thereby releasing the stress concentration generated by forming the metal circuits 23 on the C-shaped segment 211.

Specifically, each of the arc holes 214 has a center of a circle that is located at the central axis L, and the arc holes 214 are in an annular arrangement that has a center on the central axis L. A width of each of the arc holes 214 is greater than or equal to a diameter of each of the circular holes 215, each of the arc holes 214 has a central angle σ214 being less than or equal to 90 degrees (e.g., the central angle σ214 being within a range from 10 degrees to 80 degrees) relative to the central axis L, any two of the arc holes 214 adjacent to each other are provided with one of the circular holes 215 therebetween, but the present invention is not limited thereto.

It should be noted that a quantity and positions of the arc holes 214 and a quantity and positions of the circular holes 215 can be adjusted or changed according to design requirements, thereby effectively improving on the stress concentration issue. Moreover, the arc holes 214 and the circular holes 215 can be configured to further increase an oxygen permeability of the smart contact lens 100, thereby providing users with a better wearing experience.

In addition, the metal circuits 23 in the present embodiment include an antenna 231, a plurality of sensing circuits 232 arranged outside of the antenna 231, and a plurality of structural reinforcement circuits 233 that are arranged outside of the antenna 231, but the present invention is not limited thereto. For example, in other embodiments of the present invention not shown in the drawings, the structural reinforcement circuits 233 can be omitted or can be replaced by other components according to design requirements.

The antenna 231 is C-shaped and is arranged along an inner edge 21b of the annular carrier 21, and the antenna 231 has two distal portions 2313 that are arranged on the chip-bonding segment 213 and that are connected to the electronic chip 22. In the present embodiment, the antenna 231 has a main segment 2311 and two lateral segments 2312 that are connected to two ends of the main segment 2311. Moreover, a length of the main segment 2311 is greater than a length of any one of the two lateral segments 2312, a width of the main segment 2311 is less than a width of any one of the two lateral segments 2312, and the two lateral segments 2312 respectively have the two distal portions 2313.

The sensing circuits 232 are arranged outside of the two lateral segments 2312 of the antenna 231 and are electrically coupled to the electronic chip 22, and the sensing circuits 232 shown in FIG. 1 to FIG. 4 of the present embodiment are distributed on the third quadrant Q3 and the fourth quadrant Q4, but the specific structure and distribution of the sensing circuits 232 can be adjusted or changed according to design requirements and are not limited by FIG. 1 to FIG. 4.

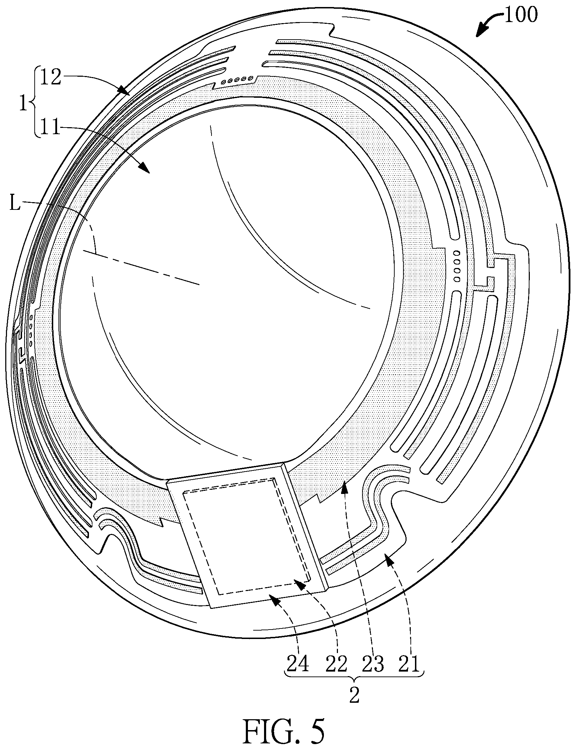

For example, as shown in FIG. 5 to FIG. 10, each of the sensing circuits 232 can be in an annular arrangement distributed on the first quadrant Q1, the second quadrant Q2, the third quadrant Q3, and the fourth quadrant Q4. Moreover, since a distribution area of the sensing circuits 232 is increased, the arc holes 214 and the circular holes 215 of the annular carrier 21 can be further added according to design requirements.

In addition, as shown in FIG. 1 to FIG. 4, the structural reinforcement circuits 233 are arranged outside of and spaced apart from the main segment 2311 and are in an annular arrangement, and the structural reinforcement circuits 233 in the present embodiment are provided without any electrical function. Specifically, the structural reinforcement circuits 233 are arranged outside of and spaced apart from the two arc holes 214, and the two arc holes 214 are arranged outside of and spaced apart from the main segment 2311 and are in an annular arrangement. In other words, the structural reinforcement circuits 233 and the main segment 2311 are provided with the two arc holes 214 (and the circular holes 215) therebetween.

### [Beneficial Effects of the Embodiment]

In conclusion, the smart contact lens or the embedded module thereof in the present invention is provided with a structural cooperation between the annular carrier and other components, so that the stress concentration of the chip-bonding segment generated from the electronic chip and the encapsulant can be gradually dispersed by the two buffering segments and then be released by the two stress blocking slots, thereby preventing a region having the metal circuits (e.g., the C-shaped segment) from being affected due to the stress concentration and effectively increasing production yield and operational efficiency of the smart contact lens.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to enable others skilled in the art to utilize the invention and various embodiments and with various modifications as are suited to the particular use contemplated. Alternative embodiments will become apparent to those skilled in the art to which the present invention pertains without departing from its scope.

## Claims

1. A smart contact lens (100), **characterized by** comprising:
a lens body (1) including an optical portion (11) and an annular wearing portion (12) that surrounds the optical portion (11), wherein the lens body (1) defines a central axis (L) that penetrates through a center of the optical portion (11); and
an embedded module (2) encapsulated in the annular wearing portion (12) and including:
an annular carrier (21), wherein an outer contour of the annular carrier (21) has a truncated cone shape, and the annular carrier (21) has a C-shaped segment (211), two buffering segments (212) respectively connected to two ends of the C-shaped segment (211), and a chip-bonding segment (213) that is connected in-between the two buffering segments (212), and wherein an outer edge (21a) of the annular carrier (21) has two stress blocking slots (211a), and the C-shaped segment (211) and each of the two buffering segments (212) are provided with one of the two stress blocking slots (211a) therebetween;
an electronic chip (22) mounted on the chip-bonding segment (213);
a plurality of metal circuits (23) formed on the annular carrier (21), wherein at least one of the metal circuits (23) is electrically coupled to the electronic chip (22) through the annular carrier (21); and
an encapsulant (24) formed on the chip-bonding segment (213), wherein the electronic chip (22) is embedded in the encapsulant (24);
wherein, in a transverse cross-section of the smart contact lens (100) perpendicular to the central axis (L) and passing through the electronic chip (22), the chip-bonding segment (213) is straight-shaped, each of the two buffering segments (212) is arced and has a first radius (R1), a center of a circle that is not located at the central axis (L), and a buffering angle (σ212) being within a range from 20 degrees to 45 degrees relative to the central axis (L), and the C-shaped segment (211) is arced and has a second radius (R2) that is greater than the first radius (R1).

2. The smart contact lens (100) according to claim 1, wherein, in a top view of the smart contact lens (100) along the central axis (L), the smart contact lens (100) defines a longitudinal axis (Y) passing through the central axis (L) and the electronic chip (22), and a transverse axis (X) is perpendicular to the longitudinal axis (Y) and passes through the central axis (L), such that the top view is divided into a first quadrant (Q1), a second quadrant (Q2), a third quadrant (Q3), and a fourth quadrant (Q4) through the longitudinal axis (Y) and the transverse axis (X), and the two stress blocking slots (211a) are respectively located in the third quadrant (Q3) and the fourth quadrant (Q4).

3. The smart contact lens (100) according to claim 2, wherein the outer edge (21a) of the annular carrier (21) has two stress adjustment slots (212a) arranged on the C-shaped segment (211), and wherein, in the top view, the two stress adjustment slots (212a) are respectively located in the first quadrant (Q1) and the second quadrant (Q2).

4. The smart contact lens (100) according to claim 3, wherein, in the top view, each of the two stress blocking slots (211a) has a first angle (σ1) relative to the central axis (L), and each of the two stress adjustment slots (212a) has a second angle (σ2) relative to the central axis (L), and wherein the first angle (σ1) is less than the buffering angle (σ212) and is within a range from 10 degrees to 30 degrees, and the second angle (σ2) is within a range from 10 degrees to 80 degrees.

5. The smart contact lens (100) according to claim 1, wherein the annular carrier (21) has a plurality of arc holes (214) each having a center of circle that is located at the central axis (L), and wherein each of the arc holes (214) is arranged between two of the metal circuits (23) adjacent to each other.

6. The smart contact lens (100) according to claim 5, wherein the annular carrier (21) has a plurality of circular holes (215), and a width of each of arc holes (214) is greater than or equal to a diameter of each of the circular holes (215), and wherein the arc holes (214) are in an annular arrangement that has a center on the central axis (L), and any two of the arc holes (214) adjacent to each other are provided with one of the circular holes (215) therebetween.

7. The smart contact lens (100) according to claim 1, wherein the metal circuits (23) include:
an antenna (231) being C-shaped and arranged along an inner edge (21b) of the annular carrier (21), wherein the antenna (231) has two distal portions (2313) that are arranged on the chip-bonding segment (213) and that are connected to the electronic chip (22); and
a plurality of sensing circuits (232) arranged outside of the antenna (231) and electrically coupled to the electronic chip (22).

8. The smart contact lens (100) according to claim 7, wherein the antenna (231) has a main segment (2311) and two lateral segments (2312) that are connected to two ends of the main segment (2311), wherein a width of the main segment (2311) is less than a width of any one of the two lateral segments (2312), and the two lateral segments (2312) respectively have the two distal portions (2313), and wherein the annular carrier (21) has:
two arc holes (214) arranged outside of and spaced apart from the main segment (2311), wherein the two arc holes (214) are in an annular arrangement; and
a plurality of circular holes (215) arranged between the two arc holes (214), wherein a width of each of the two arc holes (214) is greater than or equal to a diameter of each of the circular holes (215).

9. The smart contact lens (100) according to claim 8, wherein the metal circuits (23) include a plurality of structural reinforcement circuits (233), wherein the structural reinforcement circuits (233) are arranged outside of and spaced apart from the two arc holes (214) and are in an annular arrangement, and wherein the structural reinforcement circuits (233) are provided without any electrical function.

10. An embedded module (2) of a smart contact lens (100), **characterized by** comprising:
an annular carrier (21) defining a central axis (L), wherein an outer contour of the annular carrier (21) has a truncated cone shape, and the annular carrier (21) has a C-shaped segment (211), two buffering segments (212) respectively connected to two ends of the C-shaped segment (211), and a chip-bonding segment (213) that is connected in-between the two buffering segments (212), and wherein an outer edge (21a) of the annular carrier (21) has two stress blocking slots (211a), and the C-shaped segment (211) and each of the two buffering segments (212) are provided with one of the two stress blocking slots (211a) therebetween;
an electronic chip (22) mounted on the chip-bonding segment (213);
a plurality of metal circuits (23) formed on the annular carrier (21), wherein at least one of the metal circuits (23) is electrically coupled to the electronic chip (22) through the annular carrier (21); and
an encapsulant (24) formed on the chip-bonding segment (213), wherein the electronic chip (22) is embedded in the encapsulant (24);
wherein, in a transverse cross-section of the embedded module (2) perpendicular to the central axis (L) and passing through the electronic chip (22), the chip-bonding segment (213) is straight-shaped, each of the two buffering segments (212) is arced and has a first radius (R1), a center of a circle that is not located at the central axis (L), and a buffering angle (σ212) being within a range from 20 degrees to 45 degrees relative to the central axis (L), and the C-shaped segment (211) is arced and has a second radius (R2) that is greater than the first radius (R1).
